# EUROPÄISCHE PATENTSCHRIFT

(11) **EP 4 301 488 B1**
(45) Veröffentlichungstag und Bekanntmachung des Hinweises auf die Patenterteilung: **06.11.2024**
(21) Anmeldenummer: 22702891.7
(22) Anmeldetag: 20.01.2022
(51) Int. Cl.: B01D 29/23, B01D 29/58, B01D 36/00

(54) **FILTERVORRICHTUNG**
FILTER DEVICE
DISPOSITIF DE FILTRAGE

(30) Priorität: 07.05.2021 DE 102021002428
(43) Veröffentlichungstag der Anmeldung: 10.01.2024
(73) Patentinhaber: Hydac Filtertechnik GmbH, 66280 Sulzbach/Saar (DE)
(72) Erfinder: NENNO, Alexander, 66646 Marpingen (DE); SCHNEIDER, André Michael, 66111 Saarbrücken (DE); MORGENS, Klaus, 54293 Trier (DE); TASSONE, Marco, 66121 Saarbrücken-Eschberg (DE)
(74) Vertreter: Bartels und Partner, Patentanwälte
(86) Internationale Anmeldenummer: PCT/EP2022/051164
(87) Internationale Veröffentlichungsnummer: WO 2022/233459

(56) Entgegenhaltungen:
- EP-A1- 3 311 899
- DE-T5- 112017 005 176
- US-A1- 2019 321 758
- US-A1- 2020 038 785

## Beschreibung

Die Erfindung betrifft eine Filtervorrichtung mit den Merkmalen im Oberbegriff von Anspruch 1.

Filtervorrichtungen dieser Gattung als Bestandteil von Hydrauliksystemen sind Stand der Technik. Zur Vermeidung von Beeinträchtigungen sicherheitsrelevanter Komponenten, wie Ventilen, hydraulischen Antrieben, Steuerelementen und dergleichen, ist wesentliche Voraussetzung, dass die jeweilige Filtervorrichtung eine gleichbleibende Qualität der filtrierten Medien gewährleistet. Die einwandfreie Funktion der im System befindlichen Filtervorrichtung ist daher für die Betriebssicherheit eine Grundbedingung.

So zeigt DE 101 05 612 A1 eine Filtervorrichtung mit einem Filtergehäuse und einem darin angeordneten ersten, von einem Medium mit vorgebbarer Richtung durchströmbaren Filterelement zwecks Abreinigen von partikulären Verschmutzungen nebst einer Umgehungseinrichtung. Dadurch, dass bei der bekannten Lösung neben dem ersten Filterelement ein weiteres zweites Filterelement in koaxialer Anordnung vorhanden ist, dass die jeweiligen Filterelemente in Durchströmungsrichtung hintereinander angeordnet sind und dass bei Wirksamwerden der Umgehungseinrichtung das unmittelbar in Durchströmungsrichtung nachfolgende weitere, innenliegende Filterelement die Filtration des Mediums vornimmt, übernimmt bei Ansprechen und Betätigen der Umgehungseinrichtung das weitere Filterelement die Hauptfiltration für das Medium, da über die Umgehungseinrichtung als sogenannter Bypass das erste Filterelement im Wesentlichen nicht mehr für den Filtrationsvorgang zur Verfügung steht.

Bei der Filtration von Fluiden, wie Hydrauliköl, kommt es in der Praxis regelmäßig dazu, dass es zu einem Lufteintrag in das Fluid oder zu einem sonstigen Gaseintritt kommt, was zu Lasten der Inkompressibilität des Fluids führt nebst den hieraus sich ergebenden Nachteilen. Zwar wird im Rahmen von hydraulischen Kreisläufen das Fluid regelmäßig in einen Tank eingespeist und von dort auch wieder entnommen, wobei der Tank in der Art einer Beruhigungsstrecke Entgasungsvorgängen aus dem Fluid förderlich ist; allein im Rahmen des grundsätzlich angestrebten Downsizings in der Technik werden die Tankvolumina immer geringer und die Umlaufzyklen des Fluids in und aus dem Tank immer kürzer, so dass häufig die Bevorratungszeit im Tank nicht mehr ausreicht, im benötigten Umfang eine sichere und verlässliche Entgasung zu ermöglichen.

Um diesem Problem zu begegnen, sind im Stand der Technik, beispielsweise nach DE 10 2017 000 713 A1 bereits Entgasungseinrichtungen für Filter vorgeschlagen worden, die einen Unterdruck im Filtergehäuse erzeugen und dabei die im Filtergehäuse befindliche Luft durch Absaugen aus diesem und mithin dem Fluid entfernen. Dadurch ist der Gefahr begegnet, dass durch die im Fluid mitgeführte Luft, die Steifigkeit hydraulischer Antriebe oder Stelleinrichtungen sowie die Funktionsfähigkeit von Ventilen bis hin zum Funktionsausfall beeinträchtigt wird.

Die bekannte Filtervorrichtung setzt als Entgasungseinrichtung unter anderem eine Strahlpumpe ein, die mittels eines Medienstroms, der insbesondere von einer Hydropumpe, wie einer Zahnradpumpe, erzeugt ist, betätigt wird. Die Strahlpumpe kann hierbei durch einen externen Medienstrom oder in vorteilhafter Weise durch einen aus dem Filtrat der Filtervorrichtung gewonnenen Medienstrom betätigt sein. Die bekannte Lösung ist ausgesprochen effektiv, was die Höhe der Gasaustragmenge anbelangt; allein ist hierfür ein gewisser apparatetechnischer Aufwand notwendig und insbesondere ist zusätzlich Energie von Nöten, um die Strahlpumpe über die Hydropumpe für den Entgasungsvorgang zu betätigen.

Die US 2020/0038785 A1 beschreibt eine Filtervorrichtung mit den Merkmalen im Oberbegriff von Anspruch 1 zumindest bestehend aus zwei koaxial zueinander angeordneten Filterelementen, die zwischen sich einen Hohlraum begrenzen, wobei die dem Hohlraum zugewandte Innenseite des äußeren Filterelementes zumindest teilweise eine Abscheideeinrichtung für Gasblasen, wie Luftblasen, aufweist, wobei der Hohlraum kopfseitig in mindestens eine Abgabeöffnung für dahingehende Gasblasen ausmündet, wobei die beiden Filterelemente ineinander gestellt fuß- und kopfseitig in jeweils einer Endkappe aufgenommen sind, wobei die jeweilige Abgabeöffnung aus einem Durchlass, wie einer Bohrung, in der kopfseitigen Endkappe gebildet ist, die den Hohlraum zwischen den Filterelementen mit der Umgebung verbindet, und wobei mit einem vorgebbaren Abstand die kopfseitige Endkappe mit ihrer jeweiligen Abgabeöffnung von einer Abdecckappe übergriffen ist.

Weitere Filtervorrichtungen gehen aus der EP 3 31 1 899 A1, der US 2019/ 0321758 A1 und der DE 11 2017 005 176 T5 hervor.

Ausgehend von diesem Stand der Technik, liegt der Erfindung die Aufgabe zugrunde, eine Filtervorrichtung zu schaffen, die mit geringem apparatetechnischem Aufwand ein wirksames Entgasen eines Fluids, wie Hydrauliköl, ermöglicht, ohne zusätzlich Antriebsenergie für die Entgasungseinrichtung zur Verfügung stellen zu müssen. Eine dahingehende Aufgabe löst eine Filtervorrichtung mit den Merkmalen des Patentanspruches 1 in seiner Gesamtheit.

Gemäß dem Kennzeichen von Anspruch 1 ist vorgesehen, dass im Bereich des Übergriffs von Abdeckkappe zu kopfseitiger Endkappe ein Ringspalt gebildet ist, über den das jeweilige von einer Abgabeöffnung stammende Fluid auf eine Außenumfangsseite des äußeren hohlzylindrischen Filterelementes geführt ist.

Das insoweit über die Durchlässe, insbesondere in Form der Bohrungen, nach oben strömende Fluid wird durch die Tellergeometrie der die kopfseitige Endkappe übergreifenden Abdeckkappe homogen nach außen, in Richtung des äußeren Stützrohres des äußeren Filterelementes geleitet, wo es von dort aus als dünner, stark lufthaltiger Film herunterrinnt und zwar in Richtung des jeweiligen Tankfluidniveaus. Der dahingehend dünne Film bewirkt eine Oberflächennähe der Luftblase zur Umgebung im Tankinneren, was deren Abscheidung begünstigt.

Dadurch, dass die dem Hohlraum zugewandte Innenseite des äußeren Filterelementes zumindest teilweise eine Abscheideeinrichtung für Gasblasen, wie Luftblasen, ausbildet und dass der Hohlraum kopfseitig in mindestens eine Abgabeöffnung für dahingehende Gasblasen ausmündet, kommt es ohne zusätzliche Antriebsenergie für eine Zusatzeinrichtung, wie einer Strahlpumpe, zu einem wirksamen Entgasen des von Partikelverschmutzungen abzureinigenden Fluids. Während das zuinnerst liegende Filterelement im Wesentlichen der angesprochenen Partikelfiltration dient, erlaubt das vorzugsweise in koaxialer Anordnung zuäußerst liegende Filterelement, eine Art Luftblasenkoaleszenz an der Innenseite, die dem angesprochenen Hohlraum zwischen den beiden Filterelementen benachbart zugewandt ist. Insoweit erfährt die Filtervorrichtung eine Zufuhr von Unfiltrat auf der Innenseite des zuinnerst liegenden Filterelementes, das von innen nach außen durchströmt wird, ebenso wie das zuäußerst liegende Filterelement. Regelmäßig liegen die Gas- oder Luftblasen nicht in Reinform vor, sondern sind eingebettet und damit Bestandteil eines mehr oder minder stark gas- oder lufthaltigen Fluids bzw. Schaums und erst nach Passieren der jeweiligen Abgabeöffnung, kommt es zum Entgasen des Fluids, wobei die Fluidanteile in der entgegengesetzten Richtung auf die Fluidseite der Vorrichtung abgegeben werden.

Durch die angesprochene Abscheideeinrichtung, die eine Art Sperrschicht für Gasblasen ausbildet, auf der Innenseite des äußeren Filterelementes, erfolgt eine Art schrittweise Einteilung respektive Graduierung nach Größe der einzelnen Luftblasen und Koaleszenz der kleineren Luftblasen zu entsprechend großen, bis diese eine aufstiegsfähige Größe erreicht haben und dadurch effektiv an einer Fluidoberfläche, beispielsweise in einem Vorratstank, abgeschieden werden können. Die jeweilige Abgabeöffnung für dahingehende Gasblasen, die im Durchmesser kleiner ist als der Durchmesser des ringförmigen Hohlraums zwischen den Elementen auf der Kopfseite der Filtervorrichtung, begünstigt eine parallele Durchströmung des Filterelementverbundes, wobei sich gezeigt hat, dass sich durch die dahingehende Parallelschaltung die Strömungsgeschwindigkeit im äußeren Filterelement verringert, was eine verbesserte Koaleszenzwirkung und somit Luftabscheidung mit sich bringt. Im Hinblick auf die angesprochenen Effekte ist hierbei die erfindungsgemäße Filtervorrichtung bevorzugt für sogenannte In-Tank-Lösungen vorgesehen, bei der die gesamte Filtervorrichtung zwischen verschiedenen Fluidniveaus in einem Tank vollständig integriert ist.

Die beiden Filterelemente sind ineinander gestellt fuß- und kopfseitig in jeweils einer Endkappe aufgenommen und die jeweilige Abgabeöffnung ist aus einem Durchlass, wie einer Bohrung, in der kopfseitigen Endkappe gebildet, die den Hohlraum zwischen den Filterelementen mit der Umgebung verbindet. Insbesondere bei einer Ausgestaltung der angesprochenen Durchlässe als Bohrung kommt es zu einem verbesserten Austrag von Luftblasen, was auch in Form eines stark lufthaltigen Fluid-Schaum-Gemisches ermöglicht ist. Insoweit erfolgt eine Durchströmung der Filtervorrichtung mit dem zu entgasenden Fluid von der Fußseite zu ihrer Kopfseite hin.

Sofern die Filtervorrichtung in einem Tank verbaut ist, liegen die kopfseitigen Teile der Filtervorrichtung oberhalb des Tankfluidniveaus, so dass der über dem Fluidniveau liegende Teil der Filtervorrichtung eine oberflächennahe und beruhigte Ausströmung, insbesondere von Luft, aus dem Hydraulikmedium erlaubt. Insoweit ist ein kurzer Aufstiegsweg für die Luftblasen zur Fluidoberfläche gegeben, was eine schnelle Abscheidung begünstigt, und die angesprochenen Durchlässe in der kopfseitigen Endkappe der Filtervorrichtung erlauben eine kanalisierte Abgabe des abgeschiedenen Gases, insbesondere in Form der Luftblasen, parallel zur Ausrichtung des Elementmaterials des äußeren Filterelementes. Wie bereits vorstehend dargelegt, handelt es sich im eigentlichen Sinne um stark lufthaltiges Fluid bzw. Schaum, der aus den Öffnungen strömt, wobei die Luft dann auf dem Strömungsweg zur Fluidoberfläche entgasen kann.

Vorzugsweise ist hierbei vorgesehen, dass die Außenumfangsseite des äußeren Filterelementes aus einem perforierten Stützrohr gebildet ist, und die Perforierung, insbesondere in Form einer Lochung des Stützrohres, führt zu einer Bremswirkung beim Herunterrinnen, was die Verweildauer erhöht und wiederum die Abgabe der Luftblasen an die Umgebungsluft oberhalb des Fluidniveaus des Tanks begünstigt.

Bei einer weiteren bevorzugten Ausführungsform der erfindungsgemäßen Filtervorrichtung ist vorgesehen, dass auf der Innenseite des inneren hohlzylindrisch ausgebildeten Filterelementes ein Strömungsleitelement im Bereich der kopfseitigen Endkappe angeordnet ist. Vorzugsweise ist dabei das Strömungsleitelement in der Art eines nach innen hin sich verjüngenden Konus ausgebildet, dessen Spitze in das Innere des Hohlraumes des inneren Filterelementes ausmündet und der zur Verhinderung einer ungewollten Luftblasenansammlung unter der Endkappe im inneren Bereich des inneren Filterelementes dient.

In diesem Bereich ist vorzugsweise die kopfseitige Endkappe, also im Bereich des Strömungsleitelementes, mit der Abdeckkappe verbunden, vorzugsweise im Rahmen einer Klebstoff- oder Schraubverbindung; es besteht aber auch die Möglichkeit, Abdeckkappe und zugeordnete Endkappe aus einem Bauteil, beispielsweise im Rahmen eines Spritzgießverfahrens, zu bilden.

Bei einer weiteren besonders bevorzugten Ausführungsform der erfindungsgemäßen Filtervorrichtung ist vorgesehen, dass die beiden Filterelemente mit ihren Endkappen und der Abdeckkappe eine austauschbare Baueinheit bilden für den bevorzugten Einsatz in einem Fluidtank. Da sich insbesondere das äußere Filterelement während des Gebrauchs der Filtervorrichtung mit Partikelverschmutzung zusetzt, ist es geboten, die dahingehend verbrauchte Baueinheit gegen ein Neuelement zu tauschen, was auch für das äußere Filterelement gilt, das zumindest teilweise durch Partikelverschmutzung, trotz des innenliegenden Filterelementes, verbraucht wird. Vorzugsweise ist vorgesehen, dass die Filterfeinheit des zuinnerst liegenden Filterelementes feiner ist als die des zuäußerst liegenden Filterelementes.

Zur Aussteifung der Filtervorrichtung kann vorzugsweise vorgesehen sein, dass das innere Filterelement in Richtung des Hohlraums gleichfalls ein perforiertes Stützrohr aufweist.

Für die angesprochene Abscheideeinrichtung respektive auf der Innenumfangsseite des äußeren Filterelementes kann eine hierfür geeignete Medienlage mit Koaleszenzeigenschaft eingesetzt werden, beispielsweise aus einem Vlies bestehen, mit einem vorgegebenen Porengrößengradienten, das ausgehend von einer zuinnerst liegenden Feinstruktur zur Abströmseite hin gesehen zusehends in eine Grobstruktur übergeführt wird, was beim Durchströmen des äußeren Filterelementes mit Fluid dazu führt, dass die in dem Fluid regelmäßig feinst dispergierten Blasen aufgrund der Koaleszenzeigenschaft der insoweit als Abgabeschicht konzipierten Medienlage zu volumetrisch größeren Einheiten zusammengeführt wird. Dass hierbei vorzugsweise zum Einsatz kommende Fasermaterial, regelmäßig in Form eines Vlieses, kann Polyesterfasern aufweisen, was die Entgasungsprozesse aus dem Fluid erleichtert.

Unabhängig hiervon kann auch jede andersgeartete Medienlage als Sperrschicht, die für die Bildung großer Luftblasen geeignet ist, eingesetzt werden, insbesondere kann eine voluminöse fasrige 3D-Matrix als Entgasungssperrschicht dienen.

Insbesondere besteht die Möglichkeit, die Abgabeschicht auf der Innenseite des äußeren Filterelementes auch aus einer Gitter-, Netz- oder Gewebestruktur zu bilden, wobei die dahingehende Abgabeschicht auch aus mehreren Medienlagen gleicher oder verschiedener Art gebildet sein kann. So lassen sich mehrere Gitter- oder Netzstrukturen mit unterschiedlichen Öffnungsweiten als Einzellagen übereinandergelegt für die Entgasung oder die Kombination dahingehender Netz- oder Gitterstrukturen mit geeigneten Vliesen oder mit einer 3D-Matrix einsetzen, wie vorstehend dargelegt.

Im Folgenden wird die erfindungsgemäße Filtervorrichtung anhand einer Ausführungsform nach der Zeichnung näher erläutert. Dabei zeigen in prinzipieller und nicht maßstäblicher Darstellung die
- Fig. 1: einen Längsschnitt durch die Filtervorrichtung;
- Fig. 2: in teilweise aufgeschnittener perspektivischer Darstellung die Filtervorrichtung nach der Fig. 1, ohne kopfseitige End- und Abdeckkappe; und
- Fig. 3: in stark vereinfachter Darstellung die Einbausituation für eine Filtervorrichtung nach den Figuren 1 und 2 in einem Fluidvorratstank.

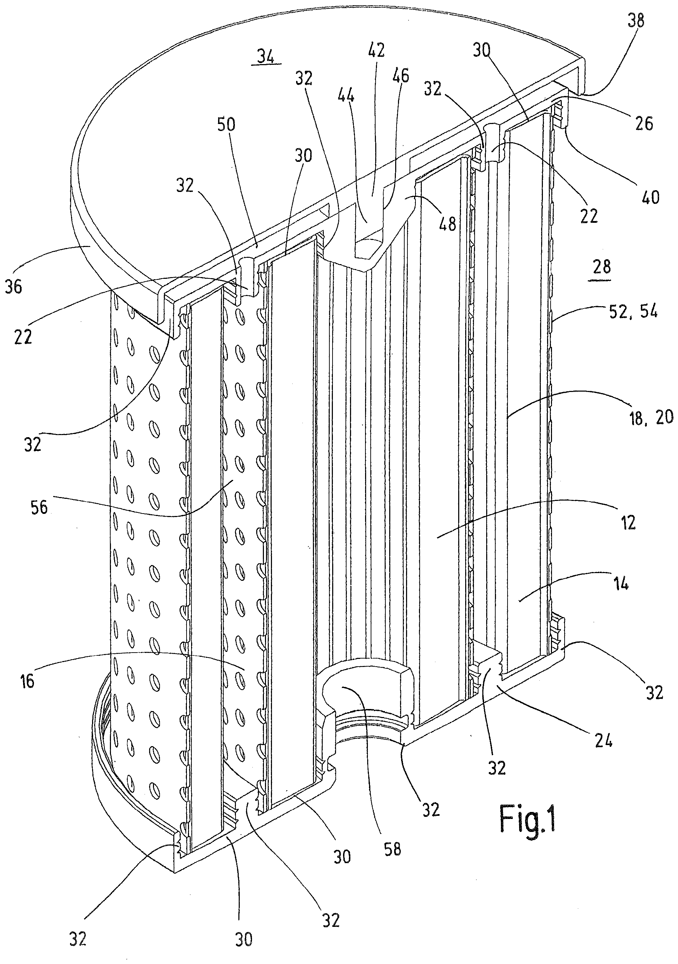

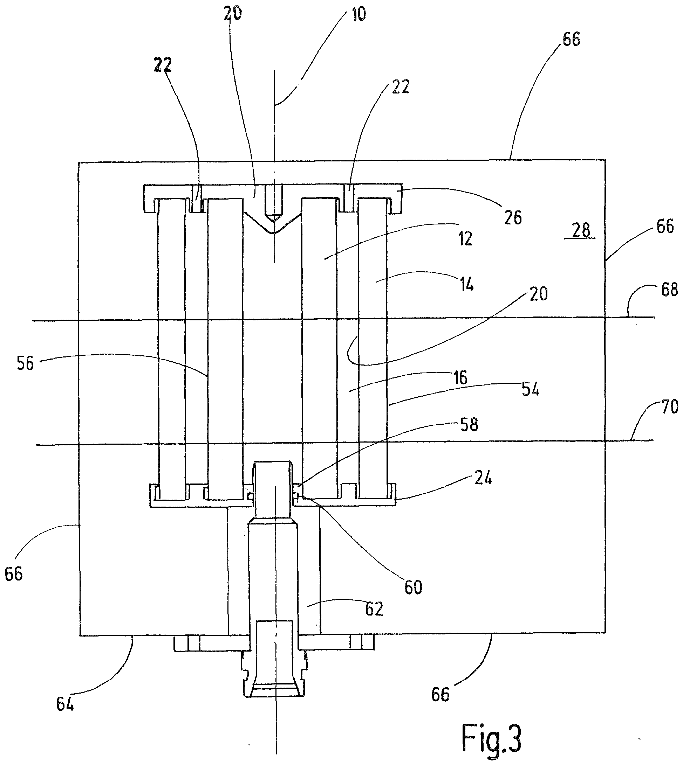

Die Figur 1 zeigt einen Längsschnitt durch die Filtervorrichtung als Ganzes. Diese weist zwei entlang einer gemeinsamen Längsachse 10 (siehe Fig. 3) koaxial zueinander angeordnete Filterelemente 12, 14 auf, die zwischen sich einen umlaufenden ringförmigen Hohlraum 16 außen- bzw. innenumfangsseitig begrenzen. Die dem Hohlraum 16 zugewandte Innenseite 18 des äußeren Filterelementes 14 weist eine Abscheideeinrichtung 20 für Gasblasen, wie Luftblasen, auf, wobei der Hohlraum 16 gemäß der Darstellung nach den Figuren kopfseitig in einzelne Abgabeöffnungen 22 für dahingehende Gasblasen ausmündet. Die beiden Filterelemente 12, 14 sind ineinander gestellt und jeweils fuß- und kopfseitig in einer gemeinsamen Endkappe 24, 26 aufgenommen, wobei die jeweilige Abgabeöffnung 22 aus einem Durchlass, insbesondere in Form einer Bohrung, in der kopfseitigen Endkappe 26 gebildet ist, die den Hohlraum 16 zwischen den Filterelementen 12, 14 mit der Umgebung 28 verbindet.

Die jeweilige Endkappe 24 und 26 ist einstückig ausgebildet und weist ringförmige Aufnahmen 30 auf, in denen die freien Stirnseiten des jeweiligen Filterelementes 12, 14 aufgenommen sind; insbesondere bilden die genannten Aufnahmen 30 eine Art Klebstoffbett aus, über das das jeweilige Filterelement 12, 14 stirnseitig mit den Endkappen 24, 26 fest verbunden ist. Der einfacheren Darstellung wegen, ist das jeweilige Klebstoffbett in den Figuren weggelassen, wobei das jeweilige Klebstoffbett sich zwischen Begrenzungsstegen 32 der einzelnen Aufnahmen 30 erstreckt.

Mit einem vorgebbaren Abstand ist die kopfseitige Endkappe 26 mit ihrer jeweiligen Abgabeöffnung 22 von einer tellerartigen Abdeckkappe 34 übergriffen. Die Abdeckkappe 34 bildet auf ihrer Oberseite eine in sich geschlossene kreisförmige Oberfläche aus und ist zu ihrem umlaufenden Ende hin, in Blickrichtung auf die Fig. 1 gesehen, nach unten hin vorstehend mit einem umlaufenden Rand 36 versehen, der gegenüber dem zuäußerst umlaufenden Begrenzungssteg 32 einen radialen Abstand einhält. Bei einer nicht näher dargestellten Ausführungsform besteht auch die Möglichkeit aus fertigungstechnischer Sicht heraus, den überstehenden Rand 36 entfallen zu lassen, so dass die obere Endkappe 26 und die Abdeckkappe 34 im Wesentlichen zwei parallel zueinander ausgebildete Führungsflächen für das gashaltige Fluid ausbilden. Ferner mündet das freie stirnseitige Ende 38 des umlaufenden Randes 36 oberhalb des unteren Endes 40 des zuäußerst angeordneten Begrenzungssteges 32 aus, wobei der insoweit gebildete freie Ringrand 40 dieses Steges 32 parallel zum freien endseitigen Ringrand 38 des umlaufenden Randes 36 verläuft. Koaxial zur Längsachse 10 angeordnet, weist die Abdeckkappe 34 entlang ihrer unteren Fläche einen Vorsprung 42 auf, der mit einer zapfenartigen Verlängerung 44 in eine Sacklochbohrung 46 eines Strömungsleitelementes 48 eingreift. Der plattenartige Vorsprung 42 übergreift dabei randseitig die Sacklochbohrung 46 und liegt auf der Oberseite des Strömungsleitelementes 48 als Teil der kopfseitigen Endkappe 26 bündig an. Insoweit bestimmt die axiale Höhe des Vorsprunges 42, parallel zur Längsachse 10 gesehen, den insoweit vorgebbaren Abstand zwischen kopfseitiger Endkappe 26 und Abdeckkappe 34 und gibt insoweit das Abstandsmaß für einen Ringspalt 50 vor, der insoweit im Bereich des Übergriffes von Abdeckkappe 34 zu kopfseitiger Endkappe 26 gebildet ist. Dieser Ringspalt 50 setzt sich insoweit außenumfangsseitig mit dem gleichen Abstand fort, zwischen zuäußerst liegendem oberen Begrenzungssteg 32 und dem nach unten vorspringenden umlaufenden Rand 36 der Abdeckkappe 34. Insoweit wird das von der jeweiligen Abgabeöffnung 22 stammende Fluid über den Ringspalt 50 auf die Außenumfangsseite 52 des äußeren hohlzylindrischen Filterelementes 14 geführt. Insbesondere ist die dahingehende Außenumfangsseite 52 des äußeren Filterelementes 14 aus einem perforierten Stützrohr 54 gebildet, das hierfür wie dargestellt mit einer symmetrisch verteilten Lochung versehen ist. Ein weiter vergleichbar ausgebildetes Stützrohr 56 bildet die Außenumfangsseite für das innere Filterelement 12 aus.

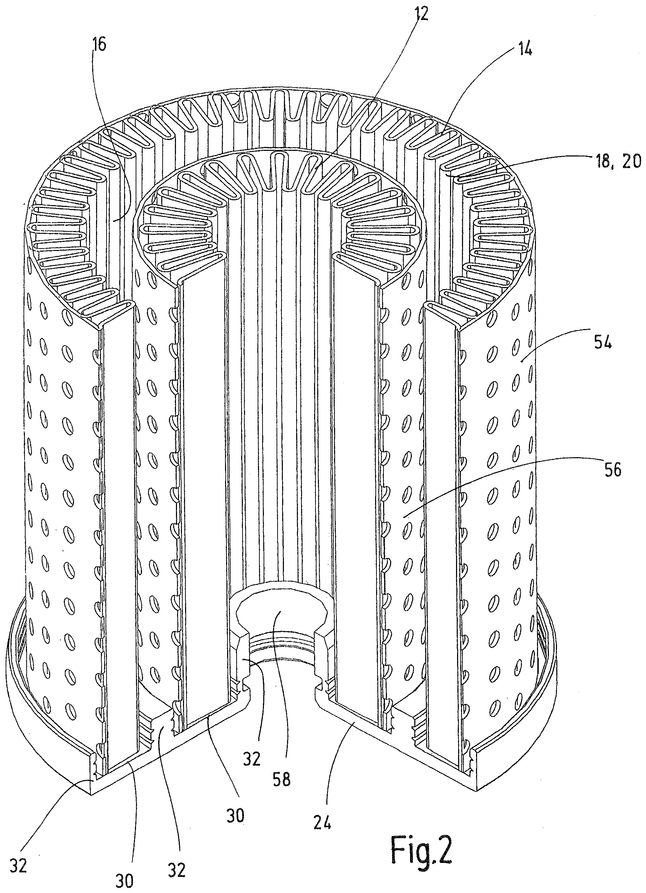

Wie insbesondere die Fig. 1 weiter zeigt, sind diametral zur Längsachse 10 einander gegenüberliegend mehrere Abgabeöffnungen 22, beispielsweise zwei bis zwölf, vorhanden, die den mittleren Begrenzungssteg 32 an der kopfseitigen Endkappe 26 vollständig durchgreifen und damit eine Fluidverbindung zwischen dem umlaufend ausgebildeten Ringspalt 50 und dem ringförmigen Hohlraum 16 herstellen. Die Abgabeöffnungen 22 erstrecken sich insoweit gleichmäßig mit definiertem radialen Abstand entlang eines fiktiven Kreises koaxial zur Längsachse 10. Die Abdeckkappe 34 kann gemäß einer nicht dargestellten Ausführungsform auch einstückiger Bestandteil der kopfseitigen Endkappe 26 sein. Die als Bohrungen im mittleren Begrenzungssteg 32 jeweils ausgebildeten Abgabeöffnungen 22 bilden kanalartige Verlängerungen an der Oberseite des Hohlraums 16 aus und sind allesamt mit der gleichen Bohrungslänge und dem gleichen Bohrungsdurchmesser versehen. Der zuinnerst liegende ringförmige Begrenzungssteg 32 an der fußseitigen Endkappe 24 bildet einen Aufnahmering 58 aus, in dem bodenseitig eine umlaufende Nut für einen Dichtungsring 60 (s. Fig. 3) eingebracht ist. Der dahingehende Aufnahmering 58 dient, wie dies die Fig. 3 zeigt, dem Festlegen einer Filtervorrichtung nach den Figuren 1 und 2 auf einem Einlaufstutzen 62, der bodenseitig mit einem Tankgehäuse 64 eines Fluid-Tanks üblicher Bauart verbunden ist, so dass an dieser Stelle hierauf nicht mehr näher eingegangen wird, und insbesondere ist der Tank in Fig. 3 in stark vereinfachter Weise nur mit 4 Begrenzungswänden 66 wiedergegeben. Wie des Weiteren die Fig. 1 zeigt, ist das Strömungsleitelement 48 auf die hohlzylindrische Innenseite des inneren Filterelementes 12 kopfseitig geführt und mündet konisch zulaufend in Richtung der Längsachse 10 in das Innere des hohlzylindrischen Filterelementes 12 aus.

Wie insbesondere die teilgeschnittene perspektivische Ansicht auf die Filtervorrichtung nach der Fig. 2 zeigt, sind die beiden Filterelemente 12, 14 plissiert ausgebildet. Der insoweit gebildete, plissierte Filtermattenaufbau kann abhängig von der Funktionalität des Filters mehrlagig aufgebaut sein, was im Stand der Technik bekannt ist. Die jeweilige Plissierung stützt sich außenumfangsseitig für das äußere Filterelement 14 am äußeren Stützrohr 54 ab und für das innenliegende Filterelement 12 an dem weiteren Stützrohr 56. Das zuinnerst liegende Filterelement 12 dient überwiegend der Partikelfiltration, sprich dem Entfernen von partikulärer Verschmutzung aus dem Fluidstrom, wohingegen das demgegenüber außenliegende Filterelement 14 überwiegend der Entgasung des Fluids dient. Die jeweils gewählte Faltenhöhe liegt im Bereich von 5 bis 35 mm und bevorzugt kommen 3- bis 7-lagige Filtermatten für die beiden Filterelemente 12, 14 zum Einsatz. Bevorzugt wird eine Faltendichte für das jeweilige Element 12, 14 zwischen 1 bis 10 Falten/cm gewählt. Auf der Innenseite 18 des äußeren Filterelementes 14 ist die Abscheideeinrichtung 20 angeordnet, die bevorzugt in den sonstigen Faltenverbund des äußeren Filterelementes 14 mit eingefaltet ist; es besteht aber auch die Möglichkeit, die Abscheideeinrichtung, beispielsweise als hohlzylindrischen Körper (nicht dargestellt), entlang der Innenumfangsseite 18 des äußeren Filterelementes 14 als separates Bauteil anzuordnen. Der dahingehende hohlzylindrische Körper kann durch eine koaleszierende Stützstruktur gebildet sein, beispielsweise in Form eines Stützrohrs mit umliegender PET-Folie. Bevorzugt ist jedoch das Einfalten der Abscheideeinrichtung, die vorzugsweise aus mehreren Lagen eines Gitter-, Netz- oder Gewebeaufbaus besteht, wobei jede Lage eine Maschenweite zwischen 10 bis 1200*µ*m aufweisen kann. Die jeweils zum Einsatz kommende Lage kann aus Edelstahl oder Kunststoffmaterial bestehen. Auf der jeweiligen Innenumfangsseite der Filterelemente 12, 14 ist kein weiteres Stützrohr vorgesehen, und da das jeweilige Element 12, 14 von innen nach außen durchströmt wird, genügt insoweit eine Abstützung des jeweiligen Elementmaterials an den äußeren Stützrohren 54, 56. Insoweit dient also als Abscheideeinrichtung 20 ein kaskadiertes Drahtgewebe aus Kunststoff oder Edelstahl, das plissiert und mehrlagig aufgebaut ist. Für das jeweilige Drahtgewebe können folgende Bindungen eingesetzt werden: eine Köperbindung, eine Atlasbindung oder im einfachsten Fall eine Leinwandbindung. Insbesondere kommen folgende Bindungsarten in Frage: 1-1-Bindung, 2-2-Bindung, 4-1-Bindung, 5-1-Bindung, 2-1-Bindung. Als besonders bevorzugt hat sich herausgestellt, bei den beiden äußeren Lagen, eine Leinwandbindung (1-1-Bindung) einzusetzen und für die mittlere Lage eine sogenannte 3-Köper-Bindung, respektive 2-1-Bindung.

Die Darstellung nach der Fig. 3 zeigt eine übliche Einbausituation in einem Tankgehäuse 64 eines Fluidvorratstanks, wobei gemäß der Darstellung nach der Fig. 3 die Filtervorrichtung als Ganzes über ihren unteren Aufnahmering 58 auf den Einlaufstutzen 62 des Tanks aufgesetzt ist, und zwar mittels des Dichtringes 60 in der zugehörigen Aufnahmenut des Ringes 58 in abgedichteter Weise. Des Weiteren ist des besseren Verständnisses wegen und exemplarisch in der Fig. 3 ein mittlerer Füllstand 68 sowie ein minimaler Füllstand 70 angedeutet. Des Weiteren kann für die Abfuhr von Luft aus dem Tankinneren eine Entlüftungsmöglichkeit (nicht dargestellt), vorzugsweise an der oberen Tankwand 66, vorhanden sein sowie eine Ablaufmöglichkeit auf der Unterseite des Tanks für von partikulärer Verschmutzung abgereinigtem und entgastem Fluid, wobei die dahingehende Ablaufmöglichkeit gleichfalls der Einfachheit halber nicht dargestellt ist.

Das zu behandelnde Fluid, beispielsweise in Form eines üblichen Hydrauliköls, strömt im Betrieb der Filtervorrichtung über den Einlaufstutzen 62 in das Innere des zuinnerst liegenden Filterelementes 12, wobei dahingehend eine Abreinigung von partikulären Verschmutzungen stattfindet, indem das Fluid von innen nach außen und das Filterelement 12 passierend in den Hohlraum 16 zwischen den Elementen 12, 14 gelangt. Das derart abgereinigte Fluid kann dann bei gegebenenfalls weiterer Abreinigung auch das äußere Filterelement 14 passieren und insoweit in das Innere des Tankgehäuses 64 gelangen. Bei dem dahingehenden Fluiddurchtritt wird auch die gitter- oder netzartige Abscheideeinrichtung 20 auf der Innenseite des äußeren Filterelementes 14 durchströmt, wobei die dahingehende Abscheideeinrichtung 20 eine Art Sperrschicht für Gas, wie Luft, bildet, mit der Folge, dass zunächst fein verteilte Gasblasen im Fluid in dispergierter Form zu größeren Blasen koaleszieren und demgemäß in Blickrichtung auf die Fig. 3 gesehen, nach oben hin aufsteigen und zwar immer über das jeweils im Tank vorhandene Fluidniveau 68, 70. Die derart nach oben hin aufsteigenden Gasblasen respektive Luftblasen treten dann über die jeweilige obere Abgabeöffnung 22 auf die Luftseite (Umgebung 28) im Inneren des Tankgehäuses 64 aus. Wie die Darstellung nach der Fig. 3 zeigt, kommt die Filtervorrichtung dem Grunde nach auch ohne Abdeckkappe 34 aus, wobei deren Vorhandensein entsprechende Vorteile mit sich bringt, insbesondere da die abgeschiedene Luft ja nach wie vor mit Flüssigkeit benetzt sein kann, die in vorteilhafter Weise, auch als Schaum, über die Abdeckkappe 34 nebst gebildetem Ringspalt 50 nach außen hin abgeführt wird, wobei die dahingehende Flüssigkeit dann über das äußere Stützrohr 54 des Filterelementes 14 nach unten hin zur Flüssigkeitsseite 68, 70 des Tanks herunterrieseln kann.

Wie des Weiteren die Fig. 3 zeigt, ist der ringförmige Hohlraum 16 durch die parallel zueinander verlaufenden Filterelemente 12, 14 begrenzt, so dass in dem Hohlraum 16 eine Art Parallelströmung für die aufsteigenden Luftblasen erzwungen wird, was die Strömungsgeschwindigkeit für das auszutragende Gas erhöht und damit die Abscheideleistung der Filtervorrichtung als Ganzes. Hierzu trägt auch das konisch ausgebildete Strömungsleitelement 48 auf der Unterseite der kopfseitigen Endkappe 26 mit bei, das dafür Sorge trägt, dass etwaig gesammelte Luft auf der hohlzylindrischen Innenseite des inneren Filterelementes 12 in Richtung der demgegenüber außenliegenden Abgabeöffnungen 22 im Rahmen einer Strömungsführung ausgetragen wird. Insbesondere sorgt die Tellergeometrie der Abdeckkappe 34 dafür, dass das durch die Bohrungen 22 nach oben strömende Fluid (Flüssigkeit mit Gas) homogen nach außen in Richtung des äußeren Stützrohres 54 geleitet wird. Dies hat so keine Entsprechung im Stand der Technik.

Neben dem angesprochenen Verkleben der Endkappen 24, 26 mit den zugeordneten Filterelementen 12, 14 kommen auch übliche Vergussverfahren zum Einsatz und sowohl die Endkappen 24, 26 als auch die Stützrohre 54, 56 lassen sich mittels gängigen Verfahren (spanend, KS-Spritzguss, 3D-Druck, etc.) in einfacher und kostengünstiger Weise erstellen, wobei die dahingehenden Komponenten der Filtervorrichtung aus Metall- und/oder Kunststoffmaterialien aufgebaut sein können. Ferner ist die Filtervorrichtung dem Grunde nach für alle gashaltigen Fluide verwendbar und ist nicht auf das Ausbringen von Luft aus Hydrauliköl eingeschränkt.

## Patentansprüche

1. Filtervorrichtung zumindest bestehend aus zwei koaxial zueinander angeordneten Filterelementen (12, 14), die zwischen sich einen Hohlraum (16) begrenzen,
wobei die dem Hohlraum (16) zugewandte Innenseite (18) des äußeren Filterelementes (14) zumindest teilweise eine Abscheideeinrichtung (20) für Gasblasen, wie Luftblasen, aufweist,
wobei der Hohlraum (16) kopfseitig in mindestens eine Abgabeöffnung (22) für dahingehende Gasblasen ausmündet, wobei die beiden Filterelemente (12, 14) ineinander gestellt fuß- und kopfseitig in jeweils einer Endkappe (24, 26) aufgenommen sind,
wobei die jeweilige Abgabeöffnung (22) aus einem Durchlass, wie einer Bohrung, in der kopfseitigen Endkappe (26) gebildet ist, die den Hohlraum (16) zwischen den Filterelementen (12, 14) mit der Umgebung (28) verbindet, und
wobei mit einem vorgebbaren Abstand die kopfseitige Endkappe (26) mit ihrer jeweiligen Abgabeöffnung (22) von einer Abdeckkappe (34) übergriffen ist,
**dadurch gekennzeichnet,**
**dass** im Bereich des Übergriffs von Abdeckkappe (34) zu kopfseitiger Endkappe (26) ein Ringspalt (50) gebildet ist, über den das jeweilige von einer Abgabeöffnung (22) stammende Fluid auf eine Außenumfangsseite (52) des äußeren hohlzylindrischen Filterelementes (14) geführt ist.

2. Filtervorrichtung nach Anspruch 1, **dadurch gekennzeichnet, dass** die Außenumfangsseite (52) des äußeren Filterelementes (14) aus einem perforierten Stützrohr (54) gebildet ist.

3. Filtervorrichtung nach Anspruch 1 oder 2, **dadurch gekennzeichnet, dass** auf der Innenseite des inneren hohlzylindrisch ausgebildeten Filterelementes (12) ein Strömungsleitelement (48) im Bereich der kopfseitigen Endkappe (26) angeordnet ist.

4. Filtervorrichtung nach Anspruch 3, **dadurch gekennzeichnet, dass** die kopfseitige Endkappe (26) im Bereich des Strömungsleitelementes (48) mit der Abdeckkappe (34) verbunden ist.

5. Filtervorrichtung nach einem der vorstehenden Ansprüche, **dadurch gekennzeichnet, dass** die beiden Filterelemente (12, 14) mit ihren Endkappen (24, 26) und der Abdeckkappe (34) eine austauschbare Baueinheit bilden für den Einsatz in einem Fluidtank (64).

6. Filtervorrichtung nach einem der vorstehenden Ansprüche, **dadurch gekennzeichnet, dass** das innere Filterelement (12) in Richtung des Hohlraumes (16) ein perforiertes Stützrohr (56) aufweist.

7. Filtervorrichtung nach einem der vorstehenden Ansprüche, **dadurch gekennzeichnet, dass** die gasabweisende Abscheideeinrichtung (20) auf der Innenseite des äußeren Filterelementes (14) aus einer Gitter-, Netz- oder Gewebestruktur gebildet ist.

## Claims

1. Filter device, consisting at least of two filter elements (12, 14) arranged coaxially with each other which define a cavity (16) between them, wherein the inside (18) of the outer filter element (14), which is directed towards the cavity (16), has at least in some part a separating device (20) for gas bubbles, such as air bubbles, wherein the cavity (16) opens at the head end into at least one discharge opening (22) for such gas bubbles, wherein the two filter elements (12, 14), placed one inside the other, are accommodated at the foot and head end in an end cap (24, 26) in each case, wherein the respective discharge opening (22) is formed of a passage, such as a drilled hole, in the head-end end cap (26) which connects the cavity (16) between the filter elements (12, 14) to the environment (28), and wherein the head-end end cap (26) with its respective discharge opening (22) is overlapped with a predefinable gap by a cover cap (34), **characterised in that**
an annular gap (50) is formed in the region of the overlap from the cover cap (34) to the head-end end cap (26), via which annular gap the respective fluid originating from a discharge opening (22) is guided to an outer circumference side (52) of the outer hollow cylindrical filter element (14).

2. Filter device according to claim 1, **characterised in that** the outer circumference side (52) of the outer filter element (14) is formed of a perforated supporting tube (54).

3. Filter device according to claim 1 or 2, **characterised in that** a flow guidance element (48) is arranged on the inside of the inner hollow cylindrical filter element (12) in the region of the head-end end cap (26).

4. Filter device according to claim 3, **characterised in that** the head-end end cap (26) is connected to the cover cap (34) in the region of the flow guidance element (48).

5. Filter device according to one of the preceding claims, **characterised in that** the two filter elements (12, 14) with their end caps (24, 26) and the cover cap (34) form a replaceable assembly for use in a fluid tank (64).

6. Filter device according to one of the preceding claims, **characterised in that** the inner filter element (12) has a perforated supporting tube (56) in the direction of the cavity (16).

7. Filter device according to one of the preceding claims, **characterised in that** the gas-repellent separation device (20) on the inside of the outer filter element (14) is formed of a lattice, mesh or fabric structure.

## Revendications

1. Installation de filtration constituée d'au moins deux éléments (12, 14) de filtre montés coaxialement l'un à l'autre, qui délimitent entre eux un espace (16) vide,
dans lequel la face (18) intérieure, tournée vers l'espace (16) vide, de l'élément (14) de filtre extérieur comporte au moins un dispositif (20) de séparation de bulles de gaz, comme de bulles d'air,
dans laquelle l'espace (16) vide débouche du côté de la tête dans au moins une ouverture (22) de dégagement de bulles de gaz,
dans laquelle les deux éléments (12, 14) de filtre sont reçus mis l'un dans l'autre du côté du pied et du côté de la tête dans respectivement une coiffe (24, 26) d'extrémité,
dans laquelle l'ouverture (22) respective de dégagement est formée d'une traversée, comme un trou, dans la coiffe (26) d'extrémité du côté de la tête, qui met l'espace (16) vide entre les éléments (12, 14) de filtre en communication avec l'environnement (28), et
dans laquelle, par une distance pouvant être donnée à l'avance, la coiffe (26) d'extrémité du côté de la tête est, avec son ouverture (22) de dégagement respective, chevauchée par une coiffe (34) de recouvrement,
**caractérisée en ce que**
dans la partie du recouvrement de la coiffe (34) de recouvrement, il est formé, par rapport à une coiffe (26) d'extrémité du côté de la tête, un intervalle (50) annulaire, par lequel le fluide respectif provenant d'une ouverture (22) de dégagement est conduit sur une face (52) périphérique extérieure de l'élément (14) de filtre extérieur cylindrique creux.

2. Installation de filtration suivant la revendication 1, **caractérisée en ce que** sur la face (52) périphérique extérieure de l'élément (14) de filtre extérieur est formée d'un tube (54) d'appui perforé.

3. Installation de filtration suivant la revendication 1 ou 2, **caractérisée en ce que** sur la face intérieure de l'élément (12) de filtre intérieur, constitué en cylindre creux, est disposé un élément (48) de conduite d'un écoulement dans la partie de la coiffe (26) d'extrémité du côté de la tête.

4. Installation de filtration suivant la revendication 3, **caractérisée en ce que** la coiffe (26) d'extrémité du côté de la tête est, dans la partie de l'élément (48) de conduite d'un écoulement, assemblée à la coiffe (34) de recouvrement.

5. Installation de filtration suivant l'une des revendications précédentes, **caractérisée en ce que** les deux éléments (12, 14) de filtre forment, par leur coiffe (24, 26) d'extrémité et la coiffe (34) de recouvrement, une unité de construction remplaçable pour l'utilisation dans un réservoir (64) de fluide.

6. Installation de filtration suivant l'une des revendications précédentes, **caractérisée en ce que** l'élément (12) intérieur de filtre a, dans la direction de l'espace (16) creux, un tube (56) d'appui perforé.

7. Installation de filtration suivant l'une des revendications précédentes, **caractérisée en ce que** le dispositif (20) de séparation repoussant les gaz sur la face intérieure de l'élément (14) de filtre extérieur est formé d'une structure en grille, en filet ou en tissu.
